# EUROPEAN PATENT APPLICATION

(11) **EP 4 289 975 A1**
(43) Date of publication of application: **13.12.2023**
(21) Application number: 22177730.3
(22) Date of filing: 08.06.2022
(51) Int. Cl.: C14B 1/56, B41J 3/407, B41M 1/38, B41M 5/00, D06P 3/32

(54) **DECORATING A HIDE BY INKJET TECHNOLOGY**

(71) Applicant: AGFA NV, 2640 Mortsel (BE)
(72) Inventor: DONDERS, Mark, 2640 Mortsel (BE); JANCART, Dieter, 2640 Mortsel (BE)
(74) Representative: Van Garsse, Joris Marc H

(57) **Abstract**

A method of decorating a hide comprising the following steps: selecting a digital layout (501) comprising a digital contour (110) of the hide; a first printing element (551) and a second printing element (552); applying the hide on a support (300) of an inkjet printer; adapting the digital layout (501) to match the digital contour (110) with the applied hide; decorating the applied hide by printing the adapted layout with the inkjet printer; and wherein the step of adapting comprises rotating (600) the first and second printing element (551, 552) by the same angle.

## Description

### Technical Field

The invention is related in the technical field of decorating a hide with inkjet printing technology.

### Background Art

The manufacturing of natural leather articles is well known and can generally be split up in five phases. The preparatory phase 1 often occurs partly in a slaughterhouse and partly in a tannery, while phases 2 to 4 occur in the tannery. In a first phase, the preparatory phase, the skin is removed from the animal (flaying) and pre-treated for the second phase of tanning. The pre-treatment may involve processes such as soaking, liming, unhairing, splitting and pickling (adjusting pH for assisting penetration of tanning agents). In the tanning phase, the protein of the rawhide or skin is converted into a stable material that will not putrefy. Chrome is most frequently used as tanning agent whereby the tanned product obtains a pale blue colour, therefore commonly called "wet blue". In the third phase of crusting, the tanned leather is dried and softened. The crusting often includes processes such as stripping (removal of superficially fixed tannins), fat liquoring (fats, oils and waxes are fixed to the leather fibres), dyeing, whitening, physical softening, and buffing (abrasion of leather surface to reduce grain defects). In the fourth phase, called the finishing phase, the leather, also called hide and which is irregular shaped, is made ready for sale to leather article manufacturers. The leather article manufacturers receive thus irregular shaped hides which varies each time in size; thickness and shape which makes it difficult to automate the decoration and cutting of said hides into decorated flat leather parts for a decorated leather article.

Leather by itself is already perceived as a luxury product, but personalization and customization, for example by decoration, can further enhance this luxury feel. Natural leather has been decorated in the past by screen printing. However, screen printing is labour intensive and for each colour an individual screen is required. This is costly and time consuming, especially when personalization or customization is desired.

Digital printing technologies on finished leather have been investigated but many solutions on finished leather remain of inferior quality. Inkjet technologies from textile printing employing heat transfer paper have been explored for leather printing. However just like inkjet printing directly onto natural leather, it was found that a process of inkjet printing dye-based images onto a sheet of transfer paper and then transferring the images onto tanned leather by heat resulted in a quality unacceptable for many luxury leather products. Examples of such inkjet processes are disclosed in WO01/32434 A (GILHAM) and US 2016067984A (CHUNG). Aspects such as image quality, light fading of transferred dyes and scratch resistance needed further improvement.

Recently high quality decorated leather has been obtained by a method of printing "into" tanned leather with pigmented inks. WO2013/135828A (CODUS) discloses a method of printing into tanned leather comprising the steps of a) applying ink acceptor directly to the surface of the leather; b) applying ink directly onto the acceptor by inkjet ; c) applying an additive to the ink; d) heating a surface of a barrier which is substantially impervious to the ink; and e) contacting the heated barrier with the ink acceptor, additive and ink on the leather surface directly to soften the additive, ink acceptor and ink into the leather such that the ink penetrates into the leather.

The decoration may be done after the manufacturing of the leather article but also decorated hides by inkjet technology may be cut into flat leather parts which are connected (e.g. sewed) together for forming a leather article, such as a shoe or handbag. The shape of said leather articles and connection (e.g. sewing) method defines the shape and dimensions of said flat leather parts. A rectangular flat leather part is sometimes called a panel but a flat leather part may be any shape to construct the leather article.

By inkjet printing on hides, the possibilities for decorating the leather articles before the sewing becomes possible. Due the variances in shape and dimensions on said hides several methods for applying a leather in an inkjet printing device are investigated such as EP3450574A1 (AGFA NV) and EP3434488A1 (AGFA NV) but there is a need wherein a layout is printed correctly within the contour of the hide. There is a real need to avoid margins of errors between a printed layout and a supplied hide which is an expensive product.

### Summary of invention

In order to overcome the problems described above, preferred embodiments of the present invention have been realised with a decoration method on a hide by inkjet technology according to claim 1.

The decoration method may be part of a manufacturing method for decorated leather articles which is made with one flat leather part or preferably a plurality of flat leather parts which came from one or more hides. One of said flat leather parts may be cut from a decorated hide.

The adaptation of the layout in view of the supplied hide which is ready for decorating, results in a more efficient and economical method of manufacturing high quality decorated natural leather articles allowing personalization and customization and having a short delivery time to the customer, as high delivery times reduce the luxury feel. The waste of expensive hide by a bad alignment of a printed layout on the hide is overcome by the present embodiment.

### Brief description of drawings

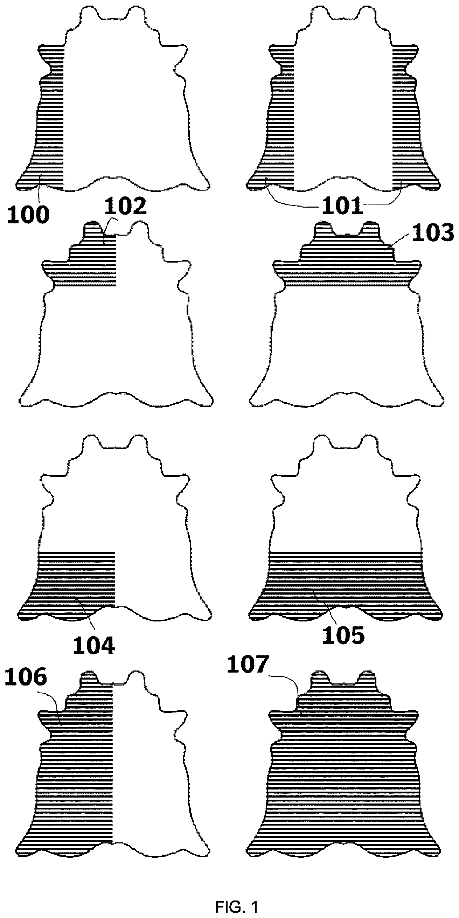

FIG. 1 illustrates several cut types of a hide.

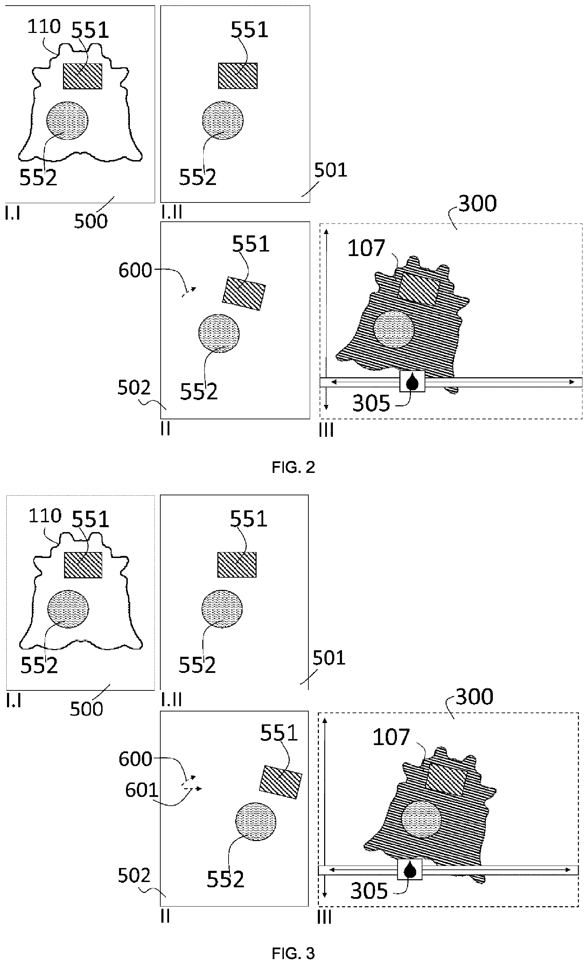

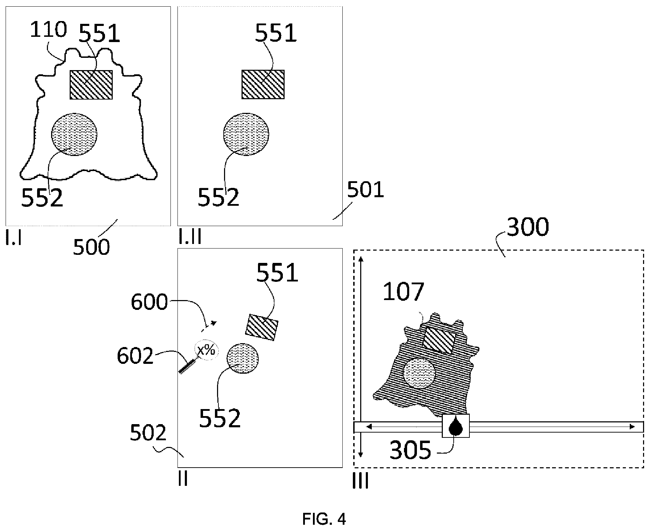

FIG. 2, FIG. 3 and FIG. 4 illustrates preferred embodiments of the present embodiment with I.I a digital layout 500); having a digital contour (110) of a whole hide and wherein said digital contour is shown but not shall be printed as shown in I.II. Within said digital contour (110) a first printing element (551) and second printing element (552) is arranged. In step II the printing elements (551, 552) are rotated (600) in an adapted digital layout (502) to match the digital contour with the applied whole hide (107) on a support (300) of an inkjet printing device, having a movable printing system (305) (as shown by the two arrows) which decorated the supported whole hide (107) with the adapted digital layout (502).
FIG. 3 shows additional the translation (601) of the first printing element (551) and second printing element (552) in the adapted digital layout (502) to match with the digital contour with the applied whole hide (107).
FIG. 4 shows additional the scaling (602) of the first printing element (551) and second printing element (552) in the adapted digital layout (502) to match with the digital contour with the applied whole hide (107).

### Description of embodiments

The present embodiment is a method of decorating a hide comprising the following steps:
- selecting a digital layout (501) comprising a digital contour (110) of the hide; a first printing element (551) and a second printing element (552);
- applying the hide on a support (300) of an inkjet printer;
- adapting the digital layout to match the digital contour (110) with the applied hide;
- decorating the applied hide by printing the adapted layout with the inkjet printer; and
wherein the step of adapting comprises:
- rotating (600) the first and second printing element (551, 552) by a same angle. The hide is preferable selected from the group consisting a belly (100, 101), a butt (104), a double butt (105), a shoulder (102), a double shoulder (103), a side (106), crusted leather and a whole hide (107). The rotation of both printing elements (551, 552) is an angular displacement around the same point.

Preferably the step of adapting comprises additional the step of translating (601) the first and second printing element (551, 552) by a same distance and/or scaling (602) the first and second printing element (551, 552) by a same scaling factor (x%).

How to adapt the digital layout (501) is by digitizing the applied hide for determining a position; the angle and/or the dimensions of the applied hide and wherein the determined position; angle and/or dimensions are used for adapting the digital layout (501).

The digital contour (110) may be determined by applying the hide on another support or the support where the hide is digitized. Optionally is said hide graded in a first digital grade zone and second digital grade zone before applying the hide on the support or the other support; and wherein the digital layout (501) is generated before the selection step by adding the digital contour (110) and applying the first printing element (551) in the first digital grade zone and the second printing element (552) in the second digital grade zone.

The digitizing of the hide is preferably performed by a vision system for capturing the applied hide and wherein the vision system is a line camera. The vision system is preferably constructed above the applied hide in full view or by scanning the vision system.

In a preferred embodiment comprises a step of applying a base-coat and protective top coat by the inkjet printer according the determined position, angle and dimensions of the applied hide. The base-coat and/or protective top coat may include a polymer or copolymer based on polyurethane and preferably the base-coat and/or protective top-coat are preferably applied by one or more valvejet print heads. At which position the protective top coat by the inkjet printer is applied, is preferably calculated from the determined position, angle and dimensions of the applied hide.

The digital layout (501) and adapted digital layout (502) are preferably defined in a page description language such as PDF^{™} of Adobe^{™} and wherein the adapted digital layout (502) is rendered by a raster image processor (RIP) to a print-ready file for printing on the applied hide. In a preferred embodiment the first printing element (551) is for decorating a first flat leather part of a decorated leather article and the second printing element (552) is preferably for decorating a second flat leather part of the decorated leather article. The present embodiment and preferred embodiments may be a step of a manufacturing method of a leather article with minimum said first flat leather part and said second flat leather part.

The inkjet printer is preferably a single pass inkjet printer having an inkjet head with a nozzle row used in the decoration-step and wherein the hide is applied on the support (300) whereby the back of the hide is parallel to said nozzle row.

In a preferred embodiment multiple adapted layouts are generated wherein for each a different angle is used within a selected range. The range is preferably from -10 degrees and 10 degrees; more preferably from -5 degrees to 5 degrees. The number of multiple adapted layouts is more than 3; preferably more than 4. The multiple adapted layouts are rendered each by a raster image processor or other raster image processor and the rendered adapted layout which match best the supplied hide is selected for printing on the supplied hide.

### Hide

In the finishing phase at the tannery, the hide, which is irregular shaped, is made ready for sale to leather article manufacturers. The tannery delivers several cut types of their hides:
- Whole hide (Leather or just Whole hide (107): a whole leather hide encloses the entire skinned and tanned hide from an animal.
- Side Leather Cut or just Side (106): it is effectively one half of the whole hide (107) lengthwise along the middle which is around the back of the animal.
- Shoulder Leather Part or just Shoulder (102): the shoulder section of a whole hide (107) comes from the shoulder area of the animals.
- Double Shoulder Leather Cut or just Double shoulder (103): the double shoulder section of a Whole hide (107) comes from the shoulder area of animals. It is predominantly the entire shoulder area from the whole hide (107).
- Butt Leather Cut or just Butt (104): the butt section of a leather hide comes from the hind leg portion of the whole hide (107).
- Double butt Leather Cut or just Double butt (105): the double butt section of a Whole hide (107) comes from the hind leg portion of the whole hide (107). It is running around the butt and up towards the spine, on both sides of the whole hide (107).
- Belly Leather Cut or just Belly (100, 101): these leather hide sections are long and narrow and comes from the belly portion of the whole hide (107).

The leather article manufacturers receive thus irregular shaped hides which varies each time in size; thickness and shape (due to the dependency of the size of the original animal and the methods used in the tannery).

In a preferred embodiment the hide that shall be decorated by inkjet technology is preferably selected from the group consisting of belly (100, 101), butt, double butt (105), shoulder (102), double shoulder (103), side (106) and whole hide (107).

The hide is more preferably crusted leather which means hide that has been tanned and crusted but not finished. For having an optimal image quality commensurate to the luxury aspect of leather, a base coat is preferably applied on said crusted leather to make it less porous.

### Manufacturing decorated hides

An image is inkjet printed using one or more pigmented inkjet inks. Contrary to most dyes, pigmented inkjet inks guarantee a good light fastness as the leather articles are often used in outdoor conditions. The one or more pigmented inkjet inks may be aqueous inkjet inks, but are preferably UV curable pigmented inkjet inks, because UV curing rapidly "freezes" the inkjet printed image. The resulting good image quality contributes further to the luxury aspect of the decorated leather article.

For enhancing the scratch resistance, a top coat may be applied onto the image and the base coat. In a preferred embodiment of the manufacturing method, the crusted leather, the base coat, the image and the top coat are heat pressed. Such a method is known from WO 2013/135828 A (CODUS) to make at least part of the sandwich "base coat/decorative inkjet image/top coat" penetrate and fuse into the leather.

It is found by using an inkjet technology, preferably single pass inkjet technology, with an inkjet print head having a nozzle row which is parallel to a back of the hide that the image quality is much higher than when the nozzle row is not parallel to said back. Probably this enhancement is caused by the internal structure in the hide. The back of a hide is the 'virtual' line that follows the back and spine of the original animal.

A support for carrying a hide in the embodiment or preferred embodiments is preferably flat such as a flat table but may also be a conveyor belt or a vacuum belt whereon the hide is applied.

### Layouts for decorating a hide or a flat leather part

There is no real limitation on the type of layout inkjet printed on the hide preferably using one or more pigmented inkjet inks. The layout may comprise text, a photograph, a decorative pattern... The layout may consist of a single colour or it may include multiple colours such as black, white, cyan, magenta, yellow, red, orange, violet, blue, green and brown. The layout is hereby rendered with a raster image processor to a printable format of a printer such as TIFF- format where after the rendered layout is transmitted to the inkjet printer for printing. The halftoning of the rendered layout may be performed by the raster image processor or by the inkjet printer.

The layout or adapted layout in the present embodiment are preferably determined in a page description language. The printing elements may be images or also determined in a page description language. An example of a page description language is PDF (portable document format) of Adobe^{™}. Other page description languages are postscript (PS) and encapsulated postscript (EPS).

In a preferred embodiment the supplied hide is digitized to know the contour of the supplied hide.
In a preferred embodiment one or more parts of a hide are decorated by inkjet technology wherein said one or more parts are cut to a flat leather part for manufacturing a leather article. The printing element in the layout has preferably then the same shape / dimension as the selected flat leather part of the leather article but it may include cutting lines for facilitating the cutting of leather pieces from the decorated hide and/or include a bleed area to overcome unprinted parts in a decorated flat leather part due alignment errors in the leather cutting machine.

### Manufacturing a decorated leather article

A leather article contains a plurality of flat leather parts which are connected, preferably sewed, together. But said several flat leather parts of said article does not necessarily to come from one hide. Depending on the leather article and position / function of the flat leather part in said leather article the position on a hide is preferably determined. The present embodiment and preferred embodiments may be a step of a manufacturing method of a decorated leather article.

The surface of the hide may be scanned for contour, holes, bite marks or other surface defects prior the decoration, the detected holes and defects could be taken into account as non-selectable area for flat leather parts with a certain function for a leather article. This is also called a digitizing step or grading step on a hide. For example, the plugin Phototrace Leather of MIRISYS^{™} is an example whereby contour of a hide is determined and also detection of defects and quality areas are determined and with CutNest of MIRISYS^{™} the positions of flat leather parts of a leather article are determined. The grading step is done when the hide is applied on a certain support and the area of the hide is divided after said step in one or more grade zones. A grade zone is a zone on the area of the hide with characteristics of the hide that is determined in function of cutting; printing and/or function of a flat leather part in a leather article such a support function. In a preferred embodiment an additional step is comprised: grading the applied hide in a first grade zone and a second grade zone. The first printing element (551) may be arranged in said first grade zone and said second printing element (552) in said second grade zone. Said arrangement may include a nesting method and preferably a true-shape nesting method.

After the hide is decorated the hide may be cut in flat leather parts. In a preferred embodiment the hide is applied on an other support for cutting. Cutting may be performed manually but is preferably done by using some kind of automation for the cutting of leather, such as e.g. implemented in the Versalis^{™} cutting machines from LECTRA.

Preferred leather articles include footwear, furniture, upholstery, bags and luggage, gloves, belts, wallets, clothing, automotive leather (e.g. train, plane, boat and car seats), interiors, books and stationary, packaging, equestrian articles and the like.

### Base Coats

The base coat applied on the hide is required to provide a level of image quality commensurate to the luxury aspect of leather as the low viscosity of inkjet inks lets them penetrate rapidly into the leather resulting in poor image quality.

The base coat preferably includes a polymer or copolymer based on polyurethane, as this has been found to improve flexibility to the printed leather. The base coat preferably further includes a polyamide polymer or copolymer, as polyamide has been found to improve the compatibility with the crust leather and to improve the strength of the base coat.

Suitable polyurethanes include Urepal^{™} PU147 and PU181 from CHEMIPAL S.p.A.; Melio^{™} Promul 61 from STAHL; Astacin^{™} Finish PS from BASF; Ecrothan^{™} 4075, 4078 and 4084 from MICHELMAN; Incorez^{™} CS8073 and CS065-195 from INCOREZ. The dry weight of the polyurethane in the base coat is preferably in the range of 1 to 6 g/m².

Suitable polyamides include the PA emulsion types ED310 and 161148 CX from MICHELMAN. The dry weight of the polyamide in the base coat is preferably less than 7 g/m², more preferably less than 5 g/m².

Although polyurethanes and/or polyamides are preferred as the polymers for the base" coat, other polymers may be used preferably in combination with the polyurethanes and/or polyamides. Such polymers preferably have an elongation at break of more than 200%, more preferably 300%. The elongation at break is measured according to ISO527-2, for example, with a MTS Exceed^{™} testing apparatus from MTS Sustems Corporation.

A suitable polymeric acrylate emulsion is Bioflex^{™} KGA from LMF Biokimica.

A cross-linker may be incorporated in the base coat to improve the strength of the base coat and the adhesion to crust leather. Preferred cross-linkers include aldehyde based cross-linkers such as formaldehyde, melamine formaldehyde derivatives, urea formaldehyde resins, glyoxal and gluraraldehyde, epoxides, oxazolines, carbodiimides and isocyanates, isocyanates being particularly preferred. The dry weight of the cross-linker in the base coat is preferably less than 1.4 g/m², more preferably less than 1.0 g/m².

The base coat may be applied by spraying or by any coating technique known, such as knife coating, extrusion coating, slide hopper coating and curtain coating.

### Pigmented Inkjet Inks

The one or more pigmented inkjet inks that are inkjet printed on a base coat of hide may be selected from aqueous pigmented inkjet inks, solvent based pigmented inkjet inks and UV curable pigmented inkjet inks. In a preferred embodiment, the one or more pigmented inkjet inks are UV curable inkjet inks.

The one or more pigmented inkjet inks preferably contain organic colour pigments as they allow for obtaining a high colour gamut on natural leather. Carbon black and titanium dioxide are inorganic pigments which can be advantageously used in the present invention for composing black respectively white pigmented inkjet inks.

A colour pigment may be chosen from those disclosed by HERBST, Willy, et al. Industrial Organic Pigments, Production, Properties, Applications. 3rd edition. Wiley - VCH, 2004. ISBN 3527305769. Suitable colour pigments are disclosed in paragraphs [0128] to [0138] of WO 2008/074548 (AGFA GRAPHICS).

In a preferred embodiment, the one or more pigmented inkjet inks form a CMYK(W) or CRYL(W) inkjet ink set.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size of an organic colour pigment and an inorganic black pigment is preferably between 0.050 and 1 µm, more preferably between 0.070 and 0.300 µm and most preferably between 0.080 and 0.200 µm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern^{™} nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

A white pigment preferably has a numeric average pigment particle size larger than 180 nm in order to have a strong opacifying capability. Suitable white pigments are given by Table 2 in [0116] of WO 2008/074548 (AGFA GRAPHICS). The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548 (AGFA GRAPHICS).

When using UV curable pigmented inkjet inks, polymerizable compounds and at least one photoinitiator is present in the inkjet ink.

Any polymerizable compound commonly known in the art may be employed. The polymerizable compound may be any monomer or oligomer found in the Polymer Handbook Vol 1 + 2, 4th edition, edited by J. BRANDRUP et al., Wiley-Interscience, 1999. An oligomer in the present invention is understood to contain 2 to 8 repeating monomeric units. Preferred monomers and oligomers are those listed in [0106] to [0115] in EP 1911814 A (AGFA).

Preferably a monomer or oligomer capable of free radical polymerization is used as polymerizable compound. A combination of monomers, oligomers and/or prepolymers may also be used. The monomers, oligomers and/or prepolymers may possess different degrees of functionality, and a mixture including combinations of mono-, di-, tri-and higher functionality monomers, oligomers and/or prepolymers may be used. However preferably an amount of at least 60 to 100 wt% of monofunctional polymerizable compounds is used in the UV curable pigmented inkjet ink with the wt% based on the total weight of the inkjet ink. The viscosity of the radiation curable inkjet inks can be adjusted by varying the amount of specific monomers and oligomers.

The UV curable inkjet ink contains one or more photoinitiators, preferably one or more free radical photoinitiators. A free radical photoinitiator is a chemical compound that initiates polymerization of monomers and oligomers when exposed to actinic radiation by the formation of a free radical.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

In a particularly preferred embodiment, the one or more photoinitiators include an acylphosphine oxide photoinitiator and a thioxanthone photoinitiator. Such a combination allows for fast UV curing with UV LEDS emitting above 370 nm. UV LEDs are more economical in operating the inkjet printing than mercury lamps.

In order to increase the photosensitivity further, the UV curable inkjet ink may additionally contain co-initiators. Suitable examples of co-initiators can be categorized in three groups: (1) tertiary aliphatic amines, such as methyldiethanolamine and N-methylmorpholine; (2) aromatic amines such as 2-(dimethylamino)ethylbenzoate; and (3) (meth)acrylated amines such as dialkylamino alkyl(meth)acrylates and N-morpholinoalkyl-(meth)acrylates. The preferred co-initiators are aminobenzoates.

A preferred amount of photoinitiator and co-initiator is 0.1 - 30 wt%, and most preferably 5 - 15 wt% of the total weight of the UV curable inkjet ink.

The one or more pigmented inkjet inks may contain further additives such as surfactants, polymerization inhibitors and dispersants for the colour pigments.

The preparation of pigmented UV curable inkjet inks is well-known to the skilled person. Preferred methods of preparation are disclosed in paragraphs [0076] to [0085] of WO 2011/069943 (AGFA).

### Protective top coats

The protective top coat may have the same or a similar composition as the base coat. Usually the protective top coat is somewhat optimized according to the leather application. For example, flexibility does not play an important role for a leather book cover contrary to leather shoes. Hence, the protective top coat for a book cover may be optimized towards scratch resistance.

For enhancing the scratch resistance, a protective top coat may be applied onto the image and the base coat. The top coat preferably includes a cross-linker and a polymer or copolymer based on polyurethane and/or polyamide. The protective top coat is preferably applied on the locations where the images are inkjet printed so less protective top coat is used. The application of said protective top coat is then preferably done by inkjet printing technology.

The protective top coat preferably includes a polymer or copolymer based on polyurethane as this is beneficial for the flexibility of the printed leather. A polyamide polymer, which is found to have a high compatibility with a polyurethane binder, is preferably included if the scratch resistance needs to be improved.

Suitable polyurethanes include Urepal^{™} PU147 and PU181 from CHEMIPAL S.p.A.; Melio^{™} Promul 61 from STAHL; Astacin^{™} Finish PS from BASF; Ecrothan^{™} 4075, 4078 and 4084 from MICHELMAN; Incorez^{™} CS8073 and CS065-195 from INCOREZ. The dry weight of the polyurethane in the protective top coat is preferably in the range of 1 to 6 g/m².

Suitable polyamides include the PA emulsion types ED310 and 161148 CX from MICHELMAN. The dry weight of the polyamide in the protective top coat is preferably less than 7 g/m², more preferably less than 5 g/m².

Although polyurethanes and/or polyamides are preferred as the polymers for the protective top coat, other polymers may be used preferably in combination with the polyurethanes and/or polyamides. Such polymers preferably have an elongation at break of more than 200%, more preferably 300%. The elongation at break is measured according to lSO527-2, for example, with a MTS Exceed^{™} testing apparatus from MTS Systems Corporation.

A suitable polymeric acrylate emulsion is Bioflex^{™} KGA from LMF Biokimica.

A cross-linker may be incorporated in the protective top coat to improve the scratch resistance. Preferred cross-linkers include those mentioned above for the base coat. The dry weight of the cross-linker in the protective top coat is preferably less than 1.4 g/m², more preferably less than 1.0 g/m².

The protective top coat may be applied by spraying or using the same coating techniques as mentioned above for the base coat.

If a matt top surface is desired for the inkjet printed leather, a matting agent may be included. Any suitable matting may be used. Preferred matting agent include silica. A preferred commercially available example of a silica dispersion is Euderm^{™} SN2 from LANXESS.

### Inkjet printing device

The image is preferably applied by an inkjet printing device. An inkjet printing device, such as an inkjet printer, is a marking device that is using an inkjet print head or an inkjet print head assembly with one or more inkjet print heads, which jets a liquid, as droplets or vaporized liquid, on a hide to form an ink layer. A pattern that is marked by jetting of the inkjet printing device on a hide is preferably an image. The pattern may be achromatic or chromatic colour.

A preferred embodiment of the inkjet printing device is that the inkjet printing device is an inkjet printer and more preferably a wide-format inkjet printer. Wide-format inkjet printers are generally accepted to be any inkjet printer with a print width over 17 inches. Inkjet printers with a print width over the 100 inches are generally called super-wide printers or grand format printers. Wide-format printers are mostly used to print banners, posters, textiles and general signage and in some cases may be more economical than short-run methods such as screen printing.

A flatbed table in the inkjet printing device may move under an inkjet print head or a gantry may move an inkjet print head over the flatbed table. These so called flatbed table inkjet printers most often are used for the printing of planar substrates, ridged substrates and sheets of flexible substrates. They may incorporate, a drying system (315), such as IR-dryers or UV-dryers, to prevent prints from sticking to each other as they are produced. An example of a wide-format printer and more specific a flatbed table inkjet printer is disclosed in EP1881903 B (AGFA GRAPHICS NV). A flatbed table may be a vacuum flatbed table (400). The flatbed table inkjet printers are than called vacuum flatbed table inkjet printers.

Preferably the inkjet printing device comprises one or more inkjet print heads jetting UV curable ink to mark substrate and a UV source (= Ultra Violet source), as dryer source, to cure the inks after marking. Spreading of a UV curable inkjet ink on a substrate may be controlled by a partial curing or "pin curing" treatment wherein the ink droplet is "pinned", i.e. immobilized where after no further spreading occurs. For example, WO 2004/002746 (INCA) discloses an inkjet printing method of printing an area of a substrate in a plurality of passes using curable ink, the method comprising depositing a first pass of ink on the area; partially curing ink deposited in the first pass; depositing a second pass of ink on the area; and fully curing the ink on the area.

A preferred configuration of UV source is a mercury vapour lamp. Within a quartz glass tube containing e.g. charged mercury, energy is added, and the mercury is vaporized and ionized. As a result of the vaporization and ionization, the high-energy free-for-all of mercury atoms, ions, and free electrons results in excited states of many of the mercury atoms and ions. As they settle back down to their ground state, radiation is emitted. By controlling the pressure that exists in the lamp, the wavelength of the radiation that is emitted can be somewhat accurately controlled, the goal being of course to ensure that much of the radiation that is emitted falls in the ultraviolet portion of the spectrum, and at wavelengths that will be effective for UV curable ink curing. Another preferred UV source is an UV-Light Emitting Diode, also called an UV-LED.

Any ultraviolet light source, as long as part of the emitted light can be absorbed by the photoinitiator or photoinitiator system, may be employed as a radiation source, such as a high or low pressure mercury lamp, a cold cathode tube, a black light, an ultraviolet LED, an ultraviolet laser,and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing. UV radiation is generally classed as UV-A, UV-B, and UV-C as follows: UV-A: 400 nm to 320 nm; UV-B: 320 nm to 290 nm; UV-C: 290 nm to 100 nm.

In a preferred embodiment, the inkjet printing device contains one or more UV LEDs with a wavelength larger than 360 nm, preferably one or more UV LEDs with a wavelength larger than 380 nm, and most preferably UV LEDs with a wavelength of about 395 nm.

Furthermore, it is possible to cure the image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printing device often includes one or more oxygen depletion units. The oxygen depletion units place a blanket of nitrogen or other relatively inert gas (e.g. CO2), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

The inkjet printing device may comprise an IR source (=Infra Red source) to solidify the ink by infra-red radiation. The IR source is preferably a NIR source (=Near Infra Red source) such as a NIR lamp or a SWIR (=Short Wave Infra Red source) such as a SWIR lamp. The IR source may comprise carbon infrared emitters which has a very short response time.

The IR source or UV source in the above preferred embodiments create a drying zone on the flatbed table to immobilize jetted ink on the substrate. Analogue as the drying zone, the inkjet printing device comprises also a printing zone on the flatbed table which defines the maximum print size of the inkjet printing device.

The inkjet printing device may comprise corona discharge equipment to treating the substrate before the substrate passes an inkjet print head of the inkjet printing device because some substrates have chemically inert and/or nonporous top-surfaces leading to a low surface energy which may result in bad print quality.

The terms "partial dry", "pin dry", and "full dry" refer to the degree of drying, i.e, the percentage of converted functional groups, and may be determined by for example RT-FTIR (Real-Time Fourier Transform Infra-Red Spectroscopy) a method well known to the one skilled in the art of drying formulations. A partial dry, also called a pin dry, is defined as a degree of curing wherein at least 5%, preferably at least 10%, of the functional groups in the coated formulation is converted. A full dry is defined as a degree of drying wherein the increase in the percentage of converted functional groups, with increased exposure to radiation (time and/or dose), is negligible. A full dry corresponds with a conversion percentage that is within 10%, preferably within 5%, from the maximum conversion percentage defined by the horizontal asymptote in the RT-FTIR graph (percentage conversion versus curing energy or drying time).

The inkjet printing device may contain a thermal curing device for removing water and organic solvents in the inkjet printed image. The thermal curing device may consist out of different units.

A pre-heating device may be included in the inkjet printing device for heating the substrate prior to jetting. The pre-heating device may be an infrared radiation source as described here below, or may be a heat conduction device, such as a hot plate or a heat drum. A preferred heat drum is an induction heat drum.

The thermal curing device may include a dryer. Suitable dryers include devices circulating hot air, ovens, and devices using air suction. However, for reducing energy consumption, preferably infrared radiation sources are used for thermal curing.

Preferred infrared radiation sources include near infrared radiation sources (NIR: 750-1400 nm) and shortwave infrared radiation sources (SWIR: 1400 -3000 nm). An advantage is that glass lenses, which may be included in the curing device for focusing the infrared light on the substrate, transmit in this infrared region, contrary to mid-wavelength infrared light (MWIR: 3000-8000 nm) or long-wavelength infrared light (LWIR: 8000 -15000nm).

The most preferred infrared light source is a SWIR light source because the water absorption significantly increases at 1450 nm.

A commercial example of a SWIR light source is a carbon infrared emitter CIR^{™} available from HERAEUS, for example emitting at a wavelength of about 2000 nm.

Another preferred thermal curing device is a NIR source emitting near infrared radiation. NIR-radiation energy quickly enters into the depth of the inkjet ink layer and removes water and solvents out of the whole layer thickness, while conventional infrared and thermo-air energy predominantly is absorbed at the surface and slowly conducted into the ink layer, which results usually in a slower removal of water and solvents.

Commercially available NIR emitters are available from ADPHOS^{™}.

The thermal curing device may be, preferably at least in part, arranged in combination with the inkjet print head of the inkjet printer, travelling therewith so that the curing radiation is applied very shortly after jetting. This allows pinning the aqueous UV free radical curable inkjet ink when jetted on the substrate.

### Corona discharge equipment

Corona discharge equipment consists of a high-frequency power generator, a high-voltage transformer, a stationary electrode, and a treater ground roll. Standard utility electrical power is converted into higher frequency power which is then supplied to the treater station. The treater station applies this power through ceramic or metal electrodes over an air gap onto the material's surface.

A corona treatment can be applied in the present invention to the hide, but also to base-coated hides.

### Inkjet print head

An inkjet print head is a means for jetting a liquid on a substrate through a nozzle. The nozzle may be comprised in a nozzle plate which is attached to the inkjet print head. An inkjet print head preferably has a plurality of nozzles which may be comprised in a nozzle plate. A set of liquid channels, comprised in the inkjet print head, corresponds to a nozzle of the inkjet print head which means that the liquid in the set of liquid channels can leave the corresponding nozzle in the jetting method. The liquid is preferably an ink, more preferably an UV curable inkjet ink or water based inkjet ink, such as a water based resin inkjet ink. The liquid used to jet by an inkjet print head is also called a jettable liquid.

The way to incorporate inkjet print heads into an inkjet printing device is well-known to the skilled person.

An inkjet print head may be any type of inkjet print head such as a valvejet print head, piezoelectric inkjet print head, thermal inkjet print head, a continuous inkjet print head type, electrostatic drop on demand inkjet print head type or acoustic drop on demand inkjet print head type or a page-wide inkjet print head array, also called a page-wide inkjet array.

An inkjet print head comprises a set of master inlets to provide the inkjet print head with a liquid from a set of external liquid feeding units. Preferably the inkjet print head comprises a set of master outlets to perform a recirculation of the liquid through the inkjet print head. The recirculation may be done before the droplet forming means but it is more preferred that the recirculation is done in the inkjet print head itself, so called through-flow inkjet print heads. The continuous flow of the liquid in a through-flow inkjet print heads removes air bubbles and agglomerated particles from the liquid channels of the inkjet print head, thereby avoiding blocked nozzles that prevent jetting of the liquid. The continuous flow prevents sedimentation and ensures a consistent jetting temperature and jetting viscosity. It also facilitates auto-recovery of blocked nozzles which minimizes liquid and receiver wastage.

The number of master inlets in the set of master inlets is preferably from 1 to 12 master inlets, more preferably from 1 to 6 master inlets and most preferably from 1 to 4 master inlets. The set of liquid channels that corresponds to the nozzle are replenished via one or more master inlets of the set of master inlets.

The amount of master outlets in the set of master outlets in a through-flow inkjet print head is preferably from 1 to 12 master outlets, more preferably from 1 to 6 master outlets and most preferably from 1 to 4 master outlets.

In a preferred embodiment prior to the replenishing of a set of liquid channels, a set of liquids is mixed to a jettable liquid that replenishes the set of liquid channels. The mixing to a jettable liquid is preferably performed by a mixing means, also called a mixer, preferably comprised in the inkjet print head wherein the mixing means is attached to the set of master inlets and the set of liquid channels. The mixing means may comprise a stirring device in a liquid container, such as a manifold in the inkjet print head, wherein the set of liquids are mixed by a mixer. The mixing to a jettable liquid also means the dilution of liquids to a jettable liquid. The late mixing of a set of liquids for jettable liquid has the benefit that sedimentation can be avoided for jettable liquids of limited dispersion stability.

The liquid leaves the liquid channels by a droplet forming means, through the nozzle that corresponds to the liquid channels. The droplet forming means are comprised in the inkjet print head. The droplet forming means are activating the liquid channels to move the liquid out the inkjet print head through the nozzle that corresponds to the liquid channels.

The amount of liquid channels in the set of liquid channels that corresponds to a nozzle is preferably from 1 to 12, more preferably from 1 to 6 and most preferably from 1 to 4 liquid channels.

The inkjet print head of the present invention is preferably suitable for jetting a liquid having a jetting viscosity of 8 mPa.s to 3000 mPa.s. A preferred inkjet print head is suitable for jetting a liquid having a jetting viscosity of 20 mPa.s to 200 mPa.s; and more preferably suitable for jetting a liquid having a jetting viscosity of 50 mPa.s to 150 mPa.s.

### Valvejet print head

A preferred inkjet print head for the present invention is a so-called Valvejet print head. Preferred valvejet print head have a nozzle diameter between 45 and 600 µm. The valvejet print head comprising a plurality of micro valves, allow for a resolution of 15 to 150 dpi that is preferred for having high productivity while not comprising image quality. A valvejet print head is also called coil package of micro valves or a dispensing module of micro valves. The way to incorporate valvejet print head into an inkjet printing device is well-known to the skilled person. For example, US 2012105522 (MATTHEWS RESOURCES INC) discloses a valvejet printer including a solenoid coil and a plunger rod having a magnetically susceptible shank. Suitable commercial Valvejet print head are chromoJET^{™} 200, 400 and 800 from Zimmer, Printos^{™} P16 from VideoJet and the coil packages of micro valve SMLD 300's from Fritz Gyger^{™}.. A nozzle plate of a Valvejet print head is often called a faceplate and is preferably made from stainless steel.

The application of a base coat and/or protective top coat is preferably performed by one or more of valvejet print heads for having a uniform layer on the hide.

The droplet forming means of a valvejet print head controls each micro valve in the valvejet print head by actuating electromagnetically to close or to open the micro valve so that the medium flows through the liquid channel. Valvejet print head preferably have a maximum dispensing frequency up to 3000 Hz.

In a preferred embodiment the valvejet print head the minimum drop size of one single droplet, also called minimal dispensing volume, is from 1 nL (= nanoliter) to 500 µL (= microliter), in a more preferred embodiment the minimum drop size is from 10 nL to 50 µL, in a most preferred embodiment the minimum drop size is from 10 nL to 300 µL. By using multiple single droplets, higher drop sizes may be achieved.

In a preferred embodiment the valvejet print head has a native print resolution from 10 DPI to 300 DPI, in a more preferred embodiment the valvejet print head has a native print resolution from 20 DPI to 200 DPI and in a most preferred embodiment the valvejet print head has a native print resolution from 50 DPI to 200 DPI.

In a preferred embodiment with the valvejet print head the jetting viscosity is from 8 mPa.s to 3000 mPa.s more preferably from 25 mPa.s to 1000 mPa.s and most preferably from 30 mPa.s to 500 mPa.s.

In a preferred embodiment with the valvejet print head the jetting temperature is from 10 °C to 100 °C more preferably from 20 °C to 60 °C and most preferably from 25 °C to 50 °C.

### Piezoelectric inkjet print head

Another preferred inkjet print head for the present invention is a piezoelectric inkjet print head. Piezoelectric inkjet print head is based on the movement of a piezoelectric ceramic transducer, comprised in the inkjet print head, when a voltage is applied thereto. The application of a voltage changes the shape of the piezoelectric ceramic transducer to create a void in a liquid channel, which is then filled with liquid. When the voltage is again removed, the ceramic expands to its original shape, ejecting a droplet of liquid from the liquid channel.

The droplet forming means of a piezoelectric inkjet print head controls a set of piezoelectric ceramic transducers to apply a voltage to change the shape of a piezoelectric ceramic transducer. The droplet forming means may be a squeeze mode actuator, a bend mode actuator, a push mode actuator or a shear mode actuator or another type of piezoelectric actuator.

Suitable commercial piezoelectric inkjet print heads are TOSHIBA TEC^{™} CK1 and CK1 L from TOSHIBA TEC^{™}

(https://www.toshibatec.co.jp/en/products/industrial/inkjet/products/cf1/) and XAAR^{™} 1002 from XAAR^{™} (http://www.xaar.com/en/products/xaar-1002).

A liquid channel in a piezoelectric inkjet print head is also called a pressure chamber.

Between a liquid channel and a master inlet of the piezoelectric inkjet print head, there is a manifold connected to store the liquid to supply to the set of liquid channels.

The piezoelectric inkjet print head is preferably a through-flow piezoelectric inkjet print head. In a preferred embodiment the recirculation of the liquid in a through-flow piezoelectric inkjet print head flows between a set of liquid channels and the inlet of the nozzle wherein the set of liquid channels corresponds to the nozzle.

In a preferred embodiment in a piezoelectric inkjet print head the minimum drop size of one single jetted droplet is from 0.1 pL to 300 pL, in a more preferred embodiment the minimum drop size is from 1 pL to 30 pL, in a most preferred embodiment the minimum drop size is from 1.5 pL to 15 pL. By using grayscale inkjet head technology multiple single droplets may form larger drop sizes.

In a preferred embodiment the piezoelectric inkjet print head has a drop velocity from 3 meters per second to 15 meters per second, in a more preferred embodiment the drop velocity is from 5 meters per second to 10 meters per second, in a most preferred embodiment the drop velocity is from 6 meters per second to 8 meters per second.

In a preferred embodiment the piezoelectric inkjet print head has a native print resolution from 25 DPI to 2400 DPI, in a more preferred embodiment the piezoelectric inkjet print head has a native print resolution from 50 DPI to 2400 DPI and in a most preferred embodiment the piezoelectric inkjet print head has a native print resolution from 150 DPI to 3600 DPI.

In a preferred embodiment with the piezoelectric inkjet print head the jetting viscosity is from 8 mPa.s to 200 mPa.s more preferably from 25 mPa.s to 100 mPa.s and most preferably from 30 mPa.s to 70 mPa.s.

In a preferred embodiment with the piezoelectric inkjet print head the jetting temperature is from 10 °C to 100 °C more preferably from 20 °C to 60 °C and most preferably from 30 °C to 50 °C.

The nozzle spacing distance of the nozzle row in a piezoelectric inkjet print head is preferably from 10 µm to 200 µm; more preferably from 10 µm to 85µm; and most preferably from 10 µm to 45 µm.

## Claims

1. A method of decorating a hide comprising the following steps:
- selecting a digital layout (501) comprising a digital contour (110) of the hide; a first printing element (551) and a second printing element (552);
- applying the hide on a support (300) of an inkjet printer;
- adapting the digital layout (501) to match the digital contour (110) with the applied hide;
- decorating the applied hide by printing the adapted layout with the inkjet printer; and
wherein the step of adapting comprises:
- rotating (600) the first and second printing element (551, 552) by a same angle (FIG. 2).

2. Method according to claim 1 wherein the step of adapting comprises additional the step of translating (601) the first and second printing element (551, 552) by a same distance (FIG. 3).

3. Method according to claim 1 or claim 2 wherein the step of adapting comprises additional the step of scaling (602) the first and second printing element (551, 552) by a same scaling factor (x%) (FIG. 4).

4. Method according to any of the previous claims wherein the applied hide is digitized for determining a position; the angle and/or the dimensions of the applied hide and wherein the determined position; angle and/or dimensions are used for adapting the digital layout (501).

5. Method according to any of the previous claims wherein the digital contour (110) is determined by applying the hide on another support where the hide is digitized and graded in a first digital grade zone and second digital grade zone before applying the hide on the support (300); and wherein the digital layout (501) is generated before the selection step by adding the digital contour (110) and applying the first printing element (551) in the first digital grade zone and the second printing element (552) in the second digital grade zone.

6. Method according to claim 4 or claim 5 wherein the hide is digitized by a vision system for capturing the applied hide and wherein the vision system is a line camera.

7. Method according to claim 4 comprising the step of applying a base-coat and protective top coat by the inkjet printer according the determined position, angle and dimensions of the applied hide.

8. Method according to claim 7 wherein the base-coat includes a polymer or copolymer based on polyurethane.

9. Method according to claim 8 comprising a step of applying a protective top coat by the inkjet printer according the determined position, angle and dimensions of the applied hide.

10. Method according to claim 9 wherein the base-coat and protective top-coat are applied by one or more valvejet print heads.

11. Method according to any of the previous claims wherein the digital layout (501) and adapted digital layout (502) are defined in a page description language and wherein the adapted digital layout (502) is rendered by a raster image processor to a print-ready file for printing on the applied hide.

12. Method according to claim 9 wherein the first printing element (551) is for decorating a first flat leather part of a decorated leather article and the second printing element (552) is for decorating a second flat leather part of the decorated leather article.

13. Method according to any of the previous claims wherein the hide is crusted leather.

14. Method according to any of the previous claims wherein the hide is selected from the group consisting a belly (100, 101), a butt (104), a double butt (105), a shoulder (102), a double shoulder (103), a side (106) and a whole hide (107).

15. Method according to any of the previous claims wherein the inkjet printer is a single pass inkjet printer having an inkjet head with a nozzle row used in the decoration-step and wherein the hide is applied on the support (300) whereby the back of the hide is parallel to said nozzle row.
